# EUROPEAN PATENT APPLICATION

(11) **EP 0 970 881 A2**
(43) Date of publication of application: **12.01.2000**
(21) Application number: 99113142.6
(22) Date of filing: 07.07.1999
(51) Int. Cl.: B62K 21/12, B62K 7/04, B62J 7/06

(54) **Bicycle with handlebar structure**

(30) Priority: 07.07.1998 JP 19139098; 24.11.1998 JP 33258098
(71) Applicant: YAMAHA HATSUDOKI KABUSHIKI KAISHA, Iwata-shi Shizuoka-ken (JP)
(72) Inventor: Kiyoshi, Hashimoto, c/o Kabushiki K. Elm-Design, Hmamatsu-shi, Shizuoka-ken (JP); Nozomu, Takata, c/o Yamaha Hatsudoki Kabushiki K., Iwata-shi, Shizuoka-ken (JP); Toyoyuki, Yamamoto, c/o Yamaha Hatsudoki K. K., Iwata-shi, Shizuoka-ken (JP)
(74) Representative: Grünecker, Kinkeldey, Stockmair & Schwanhäusser Anwaltssozietät

(57) **Abstract**

Bicycle (1) with a handlebar structure comprising a handlebar section having a steering shaft (40) rotatably installed in a handlebar post (2) at a front end of a vehicle body frame of a vehicle body and handlebar pipes (3) secured to a steering post. An object conveying space being formed in a horizontal area (3a) in front of the handlebar pipes (3) on the handlebar post (2) or the turning center of the handlebar pipes (3).

## Description

This invention relates to a bicycle with a handlebar structure comprising a handlebar section having a steering shaft rotatably installed in a handlebar post at a front end of a vehicle body frame of a vehicle body and handlebar pipes secured to a steering post.

The bicycle handlebar device comprises handlebars and a steering shaft as a rotation center shaft which is inserted for free rotation in the handlebar post which constitutes part of the body frame and is located above the front wheel.

When carrying objects or a child on a bicycle, a rear carrier provided above the rear wheel, or a front cage or a child seat provided in the front wheel or handlebar area is used. In that case, the rider prefers to use the carrier in the front wheel or handlebar area because the rider cannot pay attention to the carrier on behind.

A conventional structure for carrying objects or a child in the front wheel or handlebar area is that an object holding cage or a child seat is disposed in front of the handlebar post or between the right and left handlebars above the handlebar post.

However, when the carrier device provided in front of the handlebar post is used to carry a heavy load, steering operation becomes difficult as influenced by the heavy load.

Another problem with the carrier device provided above the steering shaft is that the width of the object to be carried is restricted because the carrying space is formed between the right and left handlebars.

Accordingly, it is an objective of the present invention to provide a bicycle as indicated above facilitating to carry heavy loads in a stabilized manner without affecting the steering operation and to carry objects without being limited by the width between the handlebars.

It is a first aspect of the invention to realize a handlebar structure that can restrict an excessive steering angle off a neutral position when carrying a heavy load, and can easily restore stabilized attitude even when a too great steering angle tends to occur.

Moreover, with the bicycle having the handlebar structure described above, stabilized steering is possible even if the bicycle is heavier than before when the bicycle is running. However, in exchange for the increased capability of carrying heavier, larger objects, there is a problem: the handlebars often turn excessively when the rider gets off and the bicycle is made to stand, when the bicycle is moved around by pushing, when riding at a low speed, or when the bicycle starts running. Once the handlebars are turned excessively due to the heavy load, a considerable force is required to return the handlebars to the neutral position. Thus, using the bicycle provided with the object cage or child seat has been laborious and delicate for housewives and people having less physical strength.

Therefore, it is a second aspect of the invention to provide a bicycle handlebar structure that prevents the handlebars from being turned excessively when the rider gets off and pushes the bicycle around, when the bicycle is standing, when the bicycle is being started to run, or when the bicycle is running at a low speed, even with a heavy load, and that makes it possible to return the handlebars to the neutral position easily even if the handlebars are turned excessively.

According to the present invention, this objective is solved for a bicycle as indicated above in that an object conveying space being formed in a horizontal area in front of the handlebar pipes on the handlebar post or the turning center of the handlebar pipes.

With this constitution, since the object-carrying space is formed in the horizontal area on the handlebar post, or turning center of the handlebar pipes, the handlebars can be operated in a stabilized manner without being disturbed even when carrying heavy objects. Furthermore, since the horizontal portion of the handlebar pipes is disposed in the longitudinal direction of the vehicle body, a wide-sized object can be carried on the horizontal portion without the object width being limited by the width of the space between the right and left handlebars.

A preferred constitution example is characterized in that positions of the horizontal and upward extending portions of the handlebar pipes are adjustable by moving those portions in forward and backward directions relative to the handlebar post either as a single body or individually.

With this constitution, the handlebar pipes constituting the carrier section are adjustable in forward and backward directions relative to the handlebar post, and the position of the handlebar pipes can be adjusted according to the size of the object carried, so that the center of gravity of the object can be brought to the position above the handlebar post, that the handlebar operation force is reduced, and that the handlebars are operated by a small force in a stabilized manner.

In another preferred constitution example is a handlebar constitution of an electric motor-operated bicycle provided with an electric motor, a battery for driving the motor, and a spare battery for the motor driving battery, characterized in that the spare battery is disposed in a position, below the horizontal portion of the handlebar pipe, behind the handlebar post, and on the vehicle body center line.
[0016]

With this constitution, since the spare battery is disposed in a position, below the horizontal portion of the handlebar pipe, behind the handlebar post, and on the vehicle body center line, the spare battery can be installed in a stabilized manner without sacrificing the object carrying space. Furthermore, since the handlebar turning shaft has a caster angle (slant from the vertical), when the heavy spare battery is placed behind the handlebar post in the vehicle body center, a force always acts to direct the front wheel connected to the handlebar post in the direction straight ahead. Thus, the operational property of the handlebars is improved.

With respect to the first aspect of the present invention, another preferred embodiment is characterized in that a movable section turning together with the steering shaft is provided and that a spring means is provided between the movable section and a stationary section provided on the vehicle body frame side to return the handlebars to the neutral position.

In that case, it is possible to either provide the movable section in the handlebar section or to use a front fork as said movable section.

With this constitution, since the spring means for returning the handlebars to the neutral position is interposed between the handlebars and the vehicle body frame, the handlebars are prevented from turning excessively due to heavy load carried on the handlebar side. Even if the handlebars tend to turn excessively, the handlebars can be easily returned to the neutral position by the help of the returning force of the spring means. In this case, the spring means is extended as pulled for example according to the turning angle of the handlebars. Since the returning force increases in proportion to the increase in the turning angle, the returning force acts effectively to restore the attitude of the vehicle that is about to lose balance due to the heavy object carried.

With respect to the second aspect of the present invention, another preferred embodiment is characterized in that play is provided between the neutral position of the handlebars and a position from which handlebar returning action is started with the spring means.
[0020]

With this constitution, since an amount of play is provided before the returning force is produced with the spring means, and the spring does not work when the handlebar turning angle is small, the handlebars can be operated freely without unusual feeling when trying to keep balance at low speeds, which is peculiar to bicycles or when the handlebar turning angle is small during a normal running.

Other preferred embodiments of the present invention are laid down in further dependent claims.

In the following, the present invention is explained in greater detail with respect to several embodiments thereof in conjunction with the accompanying drawings, wherein:
FIG. 1 is a side view of an electric motor operated bicycle provided with a handle bar according to the invention;
FIG. 2 is a side view of another embodiment of the invention;
FIG. 3 is a side view of still another embodiment of the invention;
FIG. 4 is a side view of still another embodiment of the invention;
FIG. 5 is a side view of still another embodiment of the invention;
FIG. 6 is an oblique view of the embodiment shown in FIG. 5;
FIG. 7 is an oblique view of a modification of the embodiment shown in FIG.
FIG. 8 is a side view of another embodiment of the invention;
FIG. 9 is a view as seen along the line P-P in FIG. 8;
FIG. 10 is a view as seen along the line Q-Q in FIG. 8;
FIG. 11 is a side view of still another embodiment of the invention;
FIG. 12 is an explanatory figure for another example of disposing the spring of the invention;
FIG. 13 is a side view of still another embodiment of the invention;
FIG. 14 is a view as seen along the line R-R in FIG. 13;
FIG. 15 is a view as seen along the line S-S in FIG. 13;
FIG. 16 is a view as seen along the line T-T in FIG. 13;
Fig. 17 is a side view of an electric motor operated bicycle provided with a handlebar according to the invention;
Fig. 18 is a partial side view of the handlebar structure shown in Fig. 17;
Fig. 19 is a further side view of the embodiment shown in Fig. 18, seen along the line III-III;
Fig. 20 is a sectional view seen along the line XI-XI of Fig. 18;
Figs. 21a to 21c are front plane and left side views of a first handlebar brace;
Figs. 22a and 22b are front, plane and left side views of a second handlebar brace;
Fig. 23 is a partial side view of another arrangement of the spring member;
Fig. 24 is a partial side view of a further arrangement of the spring member;
Fig. 25 is a partial side view of a still further arrangement of the spring member;
Fig. 26 is a side view seen along the line XVII-XVII of Fig. 25;
Fig. 27 is a side view seen along the line XVIII-XVIII of Fig. 25; and
Fig. 28 is a side view of first and second frame braces.

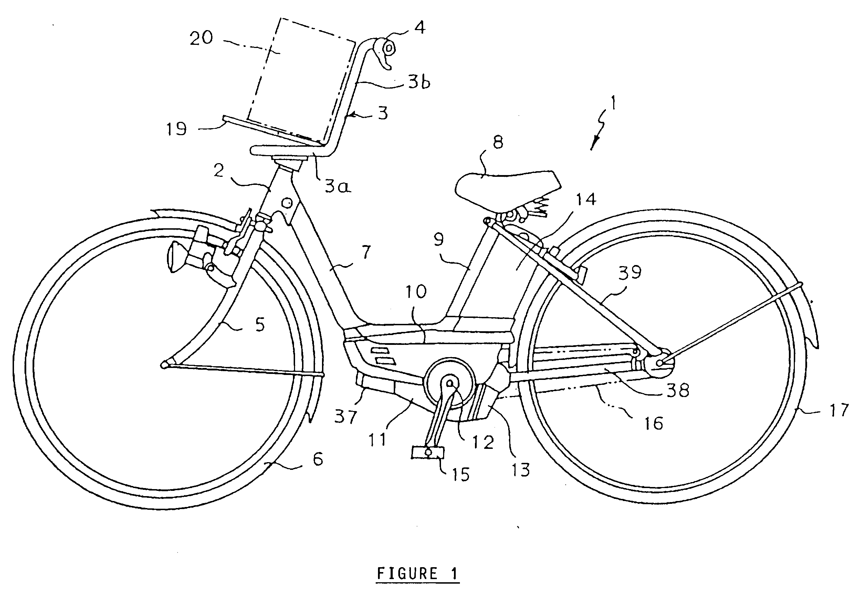

FIG. 1 is a side view of an electric motor operated bicycle 1.

The vehicle body frame of the electric motor operated bicycle 1 comprises; a front fork 5 holding a front wheel 6 from its both sides, a handlebar post 2 located above the front wheel 6, a down tube 7 connected to the handlebar post 2, a seat tube 9 connected to the down tube 7 in the vehicle body center area below a seat 8, a seat stay 39 located behind the seat 8, and a chain stay 38. A power unit 11 shrouded with a cover 10 from above is supported at the lower ends of the down tube 7 and the seat tube 9. In the power unit 11, an electric drive train comprising an electric motor 37, etc. is coupled to a human power drive train comprising a pedal 15, and a pedal crankshaft 12 rotated by the pedal force. Pedaling power on the pedal 15 and assist power of the electric motor 37 are joined together by a resultant power mechanism (not shown) disposed coaxially with the pedal crankshaft 12.

A controller 13 for controlling the assist power is located in the rear part of the power unit 11. The controller 13 is used to drive and control the electric motor 37 by calculating the ratio of the assist power relative to the pedaling force on the basis of the vehicle speed detected with a vehicle speed sensor (not shown) and using a predetermined map.

A battery case 14 that can be removed upward is located behind the seat tube 9 located below the seat 8. A battery for driving the electric motor 37 is stored in the battery case 14. The total of the pedaling power and the assist power joined together on the pedal crankshaft 12 by the resultant power mechanism is transmitted through a chain 16 to a rear wheel 17 to be driven for rotation.

Paired right and left handlebar pipes 3 (the left one only is shown) are disposed over the handlebar post 2 which is part of the vehicle body frame. Each handlebar pipe 3 has a horizontal portion 3a extending generally horizontally from the top end of the handlebar post 2 toward the rear as seen in side view, and an upward extending portion 3b curving obliquely rear upward from the rear end of the horizontal portion 3a. A brake lever and a handle grip 4 are provided at the distal end of the upward extending portion 3b. The right and left horizontal portion 3a are interconnected in about the center. To the interconnected portion is joined a steering shaft (not shown). The steering shaft is inserted for free rotation in the handlebar post 2 and is connected to the right and left front forks 5. This allows the handlebar pipe 3 to be turned by hand to turn the front forks 5 and to steer the direction of the front wheel 6.

A table 19 is secured on the horizontal portion 3a of the handlebar pipe 3 so that an object 20 is carried on the table 19, with the back side of the object 20 being supported with the upward extending portion 3b. The object 20 may also be placed directly on the horizontal portion 3a. In that case, a basket or a child seat is formed so that its underside is supported on the horizontal portion 3a of the handlebar pipe 3 and that its back side is supported with the upward extending portion 3b. In this way, the object or the like may be carried and supported in a stabilized manner. In this case, since the end portions of the upward extending portion 3b of the right and left handlebar pipe 3 are formed to slant slightly backward (toward the rider), the handlebars can be operated without being obstructed with the object located in front of the upward extending portion 3b.

In this way, with the constitution in which the handlebar pipe 3 is formed in a generally L shape in side view, and the horizontally extending portion 3a is placed over the handlebar post, namely the center of the handlebar turning, the handlebars can be operated in a stabilized manner without being disturbed even when carrying a heavy object, and a large object can be carried without the object width being limited by the width of the space between the right and left handlebars.

Incidentally, the L-shape of the handlebar pipes 3 may also be formed with two separate parts; the horizontally extending part 3a and the upward extending part 3b, with the part 3b joined to the rear end of the part 3a.

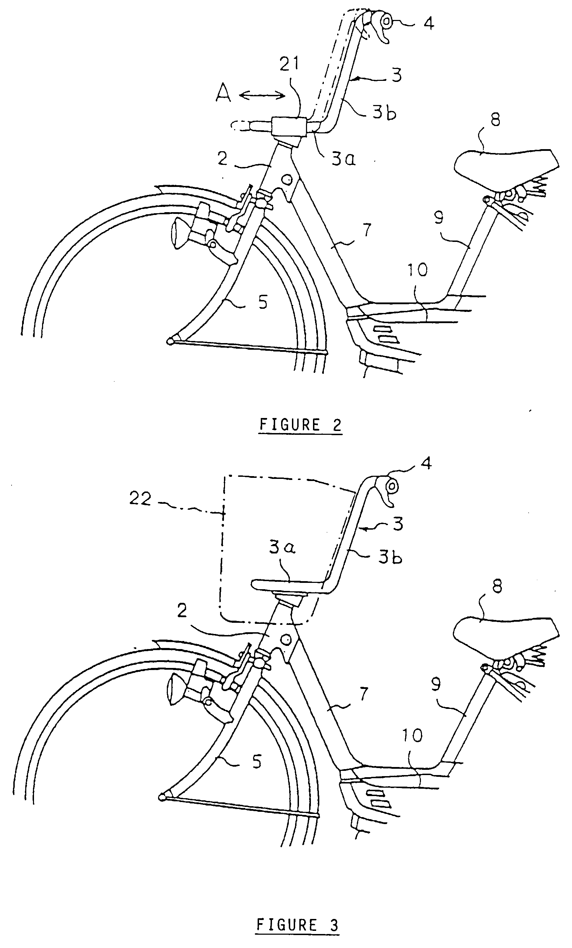

FIG. 2 is a side view of another embodiment of the invention. In this embodiment, the horizontal portion 3a of the handlebar pipe 3 is slidably attached to a slide-holding member 21 provided at the top end of the handlebar post 2 to permit sliding back and forth. In this way, the position of the handlebar pipe 3 on the handlebar post 2 may be slid back and forth so that the center of gravity of the object placed on the handlebar pipe 3 is positioned over the handlebar post 2. This makes it possible to support the object weight with the handlebar post, and to make handlebar operation lighter and more stabilized without being disturbed by the weight of the object.

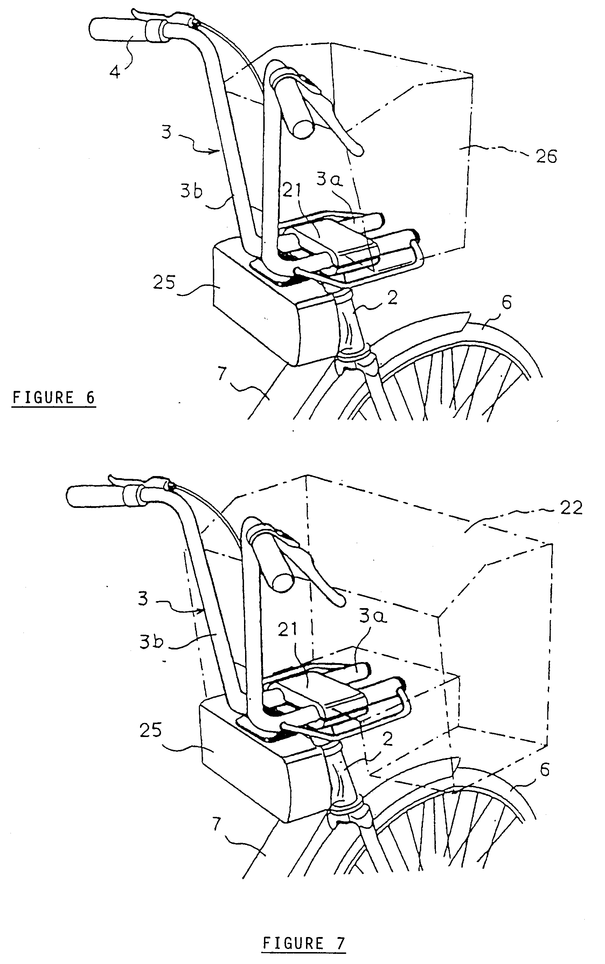

FIG. 3 is a side view of still another embodiment of the invention. In this embodiment, the handlebar pipe 3 is provided with a basket 22. The basket 22 is formed with a great width so that its holding volume straddles the horizontally extending portion 3a of the handlebar pipe 3 (See FIG. 7). In this way, the handlebar pipe 3 of this invention permits installation of a basket of great width and holding volume without being restricted by the distance between the right and left handlebar pipes 3.

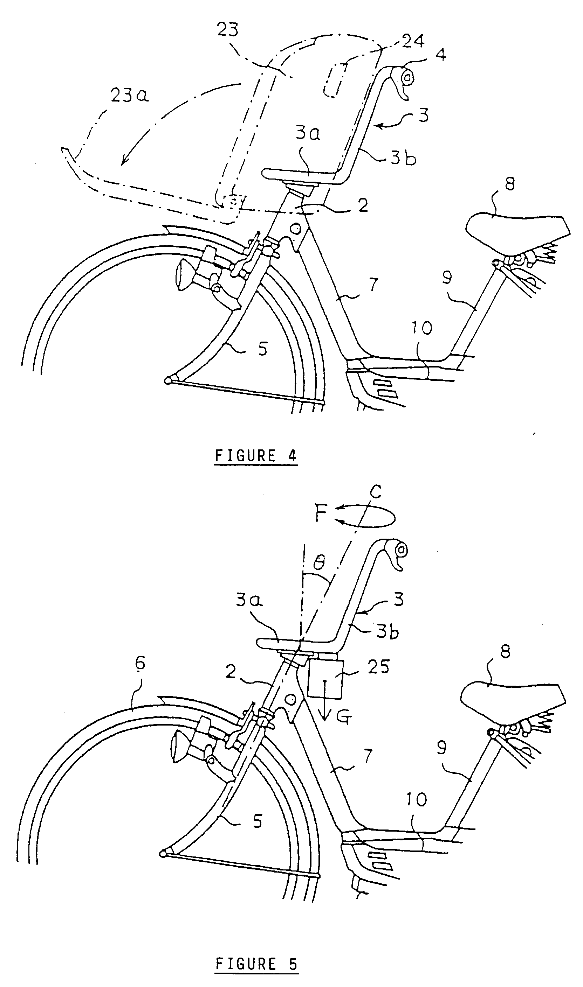

FIG. 4 is a side view of still another embodiment of the invention. In this embodiment, the handlebar pipe 3 is provided with a holding box 23. As shown, the holding box 23 has a lid 23a that can be swung open forward. Like the basket 22 of FIG. 3, the holding box 23 is also formed with its holding volume widely extended right and left to straddle the horizontally extending portion 3a of the handlebar pipe 3. The right and left sides of the holding box 23 are respectively provided with rear view mirrors 24.

FIG. 5 is a side view of still another embodiment of the invention. In this embodiment, the electric motor-operated bicycle shown in FIG. 1 is provided with a spare battery 25 for driving the electric motor. The spare battery 25 is disposed on the vehicle center line, behind and below the horizontally extending portion 3a of the handlebar pipe 3. As shown, the rotary axis C of the handlebar pipe 3 is coaxial with the handlebar post 2 and is tiled by a caster angle θ relative to the vertical line. Because the handlebar rotation axis C is tiled by the caster angle θ, when the spare battery 25 is disposed with a rearward displacement, a gravitational force G always produces a force shown with the arrow F that tends to direct the front wheel 6 straight forward.

In other words, when the handlebar pipe 3 is rotated by turning the handlebars, the spare battery 25 also rotates about the rotation axis C. Since the center of gravity of the spare battery 25 is displaced from the tilted rotation axis, the center of gravity always tends to return to its lowest position due to the downward directed gravitational force. As a result, a restoration force is exerted to the front wheel 6 and the handlebar pipe 3. Thus, ease of operating the handlebars is improved.

FIG. 6 is an oblique view of the embodiment provided with the spare battery 25. In this example like the above-described embodiment in reference to FIG. 2, the position of the handlebar pipe 3 is made adjustable by sliding back and forth along the slide-holding member 21. Also, a basket 26 is provided over the handlebar pipe 3.

FIG. 7 shows an arrangement, based on the embodiment provided with the spare battery as shown in FIG. 6, in which the basket 26 is replaced with the basket 22 described in reference to FIG. 3 and having a wide and large holding volume straddling the horizontally extending portion 3a of the handlebar pipe 3 and extending to both sides of the handlebar post 2.

With the embodiments of the invention described above, since the carrying space for an object basket or a child seat is formed by displacing the vertical portions of the handlebar pipes backward from the steering shaft, even a large, heavy object can be carried. Also, even when carrying such a large object or the like, ease of operation and handling is improved: The handlebars can be operated in a more stabilized manner whether the bicycle is running or standing in comparison with the conventional arrangement in which the object is displaced from the steering shaft. Even when the vehicle body is tilted, the handlebars do not turn largely off the neutral position.

However, it is preferable to further improve the ease of handling the vehicle body as well as the handlebar operation by preventing the handlebars from turning excessively especially when the rider gets off the bicycle and pushes it around for parking, by further securing the stability in handlebar operation when carrying a large object.

The following embodiment is intended to realize a handlebar structure capable of preventing the handlebars from turning excessively off the neutral position due to the heavy load on the carrier and capable of returning easily to a normal state even if such an excessive turning occurs.

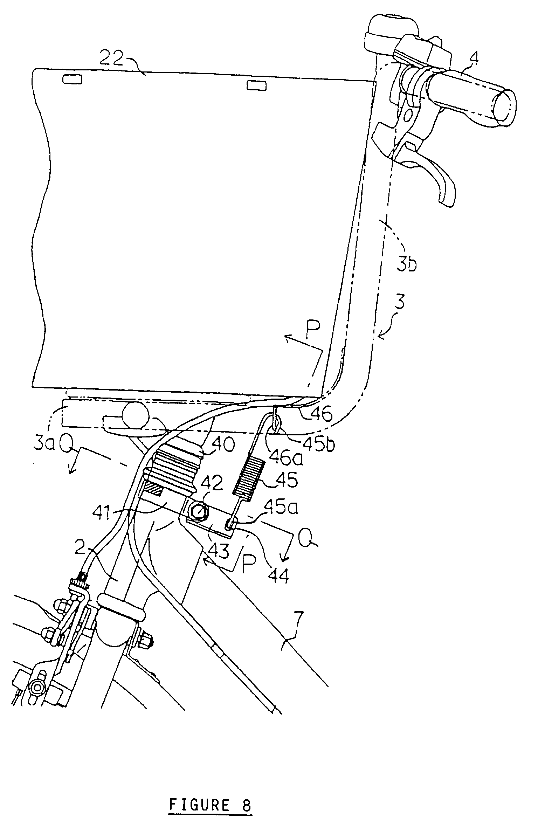

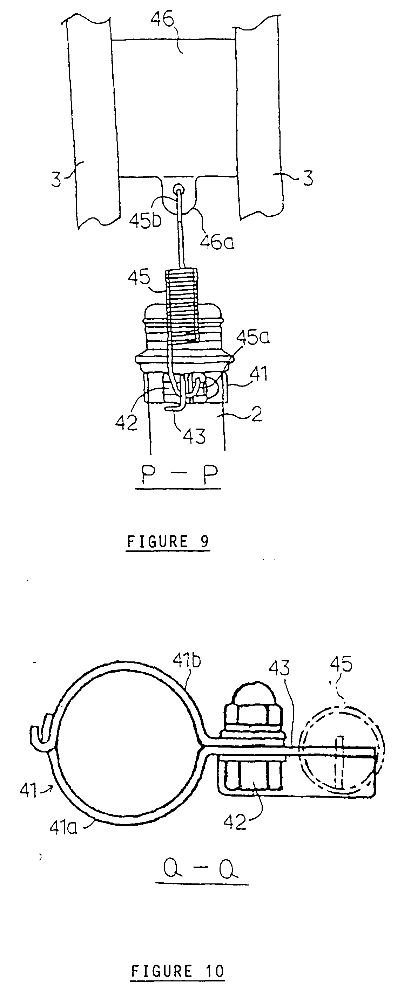

FIG. 8 shows a side view of an embodiment provided with a spring means for restricting the handlebar turning. FIGs. 9 and 10 show respectively a plan view and a side view as seen along the lines P-P and Q-Q in FIG. 8.

Right and left handlebars 3 with their ends having grips 4 have a horizontal portion 3a and a vertical (upward extending) portion 3b behind the horizontal portion 3a. A steering shaft 40 connected to the center between the right and left handlebar pipes 3 is rotatably inserted into a head pipe 2 located at the front end of a vehicle body frame. To the head pipe 2 is joined a down tube 7. A connecting plate 46 is secured between the right and left handlebar pipes 3. The connecting plate 46 has a lug 46a at its lower end center. Therefore, the lug 46a is one of movable members which rotate together with handlebar pipes 3 and the steering shaft 40 when the handle bars are turned.

Over against the lug 46a as one of the movable members, a securing brace 41 as a stationary member secured to the vehicle body frame side is attached to the head pipe 2. The securing brace 41 is made up of a pair of semicircular brace pieces 41a, 41b to hold the head pipe 2 from right and left sides, and is tightened with a bolt 42. The brace piece 41a has a lug 43.

One hook 45a of a spring 45 is hooked to the lug 46a on the movable side provided on the connecting plate 46 for the handlebar pipes 3 as described above and the other hook 45b of the spring 45 is hooked to the lug 43 on the stationary side provided on the head pipe 2. The spring 45 acts against the turning of the lug 46a located on the handlebar side when the handlebars are turned. The lug 43 on the stationary side is formed with an elongated slot 44 to which is hooked the hook 45a of the spring 45. In this case, the elongated slot 44 provides play for the spring 45. The length of the elongated slot 44 corresponds to the length of play from the neutral position of the handlebars facing straight ahead to an action start position at which the hook 45a engages the end of the elongated slot to exert tensile force.

With the handlebar structure provided with the spring constituted as described above, if a heavy object is carried in the basket 22 provided on the handlebar pipes 3 and when the handlebars tend to turn largely off the neutral position due to the weight of the object, the spring 45 works to pull the handlebars back to the neutral position, and the handlebars are prevented from turning largely. Use of such a spring 45 makes it possible to prevent large turning of the handlebars with a simple structure without making extensive changes in the handlebar structure of conventional bicycles. Also, the spring 45 disposed under the object basket or the child seat does not stand out when seen from outside and does not detract from aesthetic appearance.

Since the elongation (displacement) of the spring 45 increases with the turning angle of the handlebars and elastic restoration force acts in proportion to the displacement, the action start point of the restoration force starts from the point where the restoration force is zero. As a result, handlebar operation can be made smoothly free from unnatural feeling. Since a large restoration force toward the neutral position is produced when the handlebars are turned largely and the spring works effectively, even a person who is not so strong physically can easily restore the bicycle attitude.

Furthermore, since play is provided before the handlebar restoration force is applied with the spring 45, the spring 45 does not work when the handlebar turning angle is small, the handlebars can be operated freely without unusual feeling when trying to keep balance at low speeds, which is peculiar to bicycles or when the handlebar turning angle is small during a normal running.

Also, since the spring 45 is disposed under the handlebar pipes and engages with the head pipe, the space for it is not restricted and freedom of movement can be set high, and it is possible to design the spring strength (spring constant), wire diameter, number of coil turns, and coil diameter with wide ranges of freedom to set the restoration force start point, restoration force magnitude, etc. in line with the physical strength and preference of the user, and to meet wide ranges of users' demands.

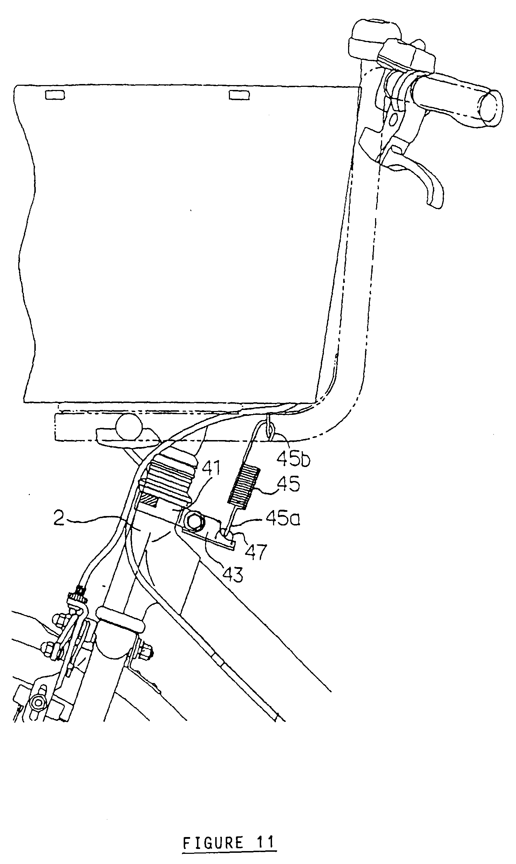

FIG. 11 shows still another embodiment. In this embodiment, a wire 47 is welded to the lug 43 of the securing brace 41, and the hook 45a is hooked to the wire 47 at the lower end of the spring 45. In this case, the wire 47 is made with a ring size to provide play for the hook 45a, like with the elongated slot 44 of the embodiment described above in reference to FIG. 8.

Other configurations and effects are the same as those of the embodiment described above in reference to FIG. 8.

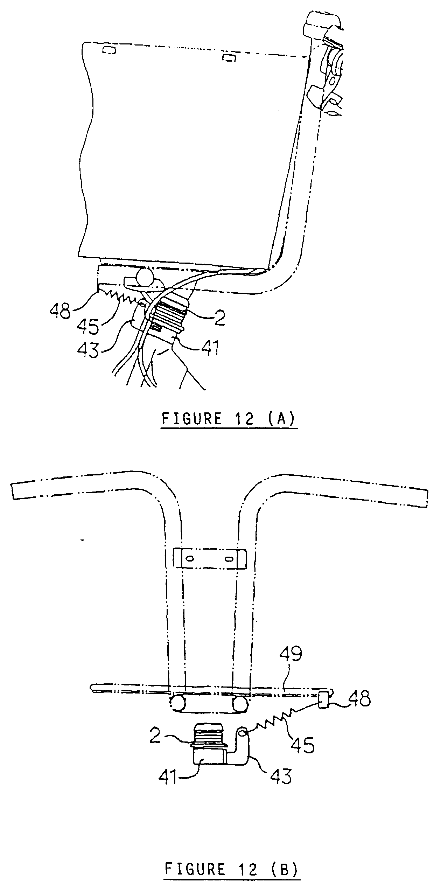

FIGs. 12 (A) and 12 (B) show other layout examples of the spring 45.

FIG. 12 (A) shows an example in which the spring 45 is disposed in front of the head pipe 2. Both ends of the spring 45 are respectively hooked to the lug 48 provided at the end of the handlebar pipe 3 and to the lug 43 of the securing brace 41 provided on the front side of the head pipe 2. In this case, it is also possible to engage the end hook of the spring 45 using the wire, like the example shown with FIG. 11.

FIG. 12 (B) shows an example in which the spring 45 is by the side of the head pipe 2. Both ends of the spring 45 are respectively hooked to the lug 48 provided on the object supporting pipe 49 and to the lug 43 of the securing brace 41 provided by the side of the head pipe 2. In this case too, it is possible to engage the end hook of the spring 45 using the wire, like the example shown with FIG. 12.

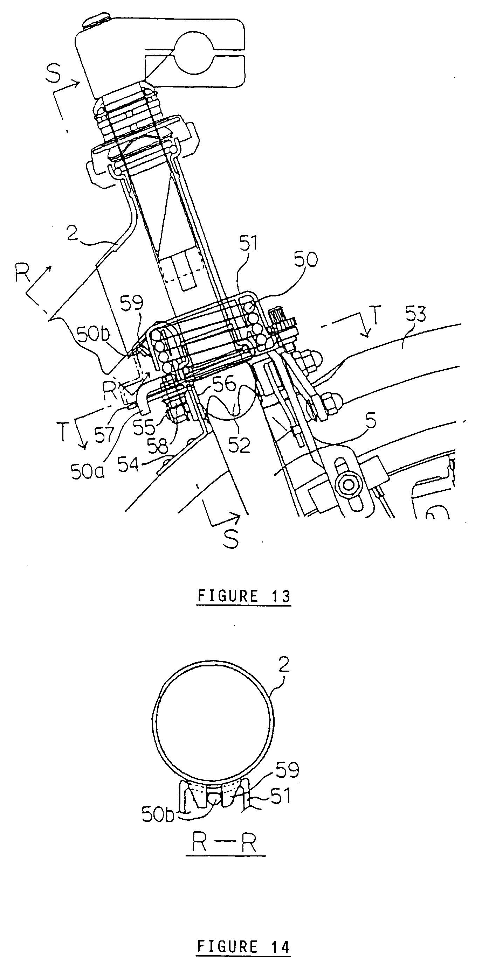

FIG. 13 is a side view of another embodiment of the handlebar structure provided with the spring for restricting the handlebar turning. FIGs. 14, 15, and 16 respectively show cross sections as seen along the lines R-R, S-S, and T-T in FIG. 13.

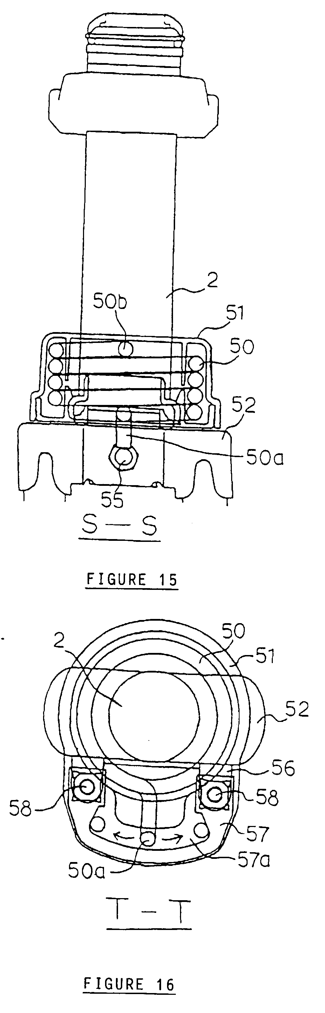

In this embodiment. a coil spring 50 is disposed at the lower end of the head pipe 2 and covered with a cover 51. A stay 54 for securing a front fender (mudguard) 53 is secured with a bolt 55 to a cap member 52 disposed at the top end of the front fork 5. The bolt 55 is further used to secure a bracket 56 of an L-shape in cross section to the cap member 52 together with the stay 54. A securing piece 57 is secured with bolts 58 to the top surface of the L-shape-bent portions on the right and left ends of the bracket 56 (See FIG. 16). The bent, lower end 50a of the coil spring 50 is inserted into a slot 57a formed inside the securing piece 57 so as to be movable as indicated with arrows in the figure. The slot 57a provides play for the coil spring 50. The upper end of the coil spring 50 is squeezed and held between paired right and left stop pieces 59 welded to the head pipe 2.

By the use of the coil spring 50 constituted as described above, like the embodiment described above in reference to FIGs. 8 to 10, the effect of returning the handlebars to the neutral position is obtained. Since play is provided in the vicinity of the neutral position of the handlebars, the handle operation is smooth and free from unusual feeling. Other configuration and effects are the same as those of the embodiment described above.

According to the invention described above, since the object carrying space is formed in the horizontal area on the handlebar post, or turning center of the handlebar pipes, the handlebars can be operated in a stabilized manner without being disturbed even when carrying heavy objects. Furthermore, since the horizontal portion of the handlebar pipes is disposed in the longitudinal direction of the vehicle, a wide object can be carried on the horizontal portion without the object width being limited by the width of the space between the right and left handlebars.

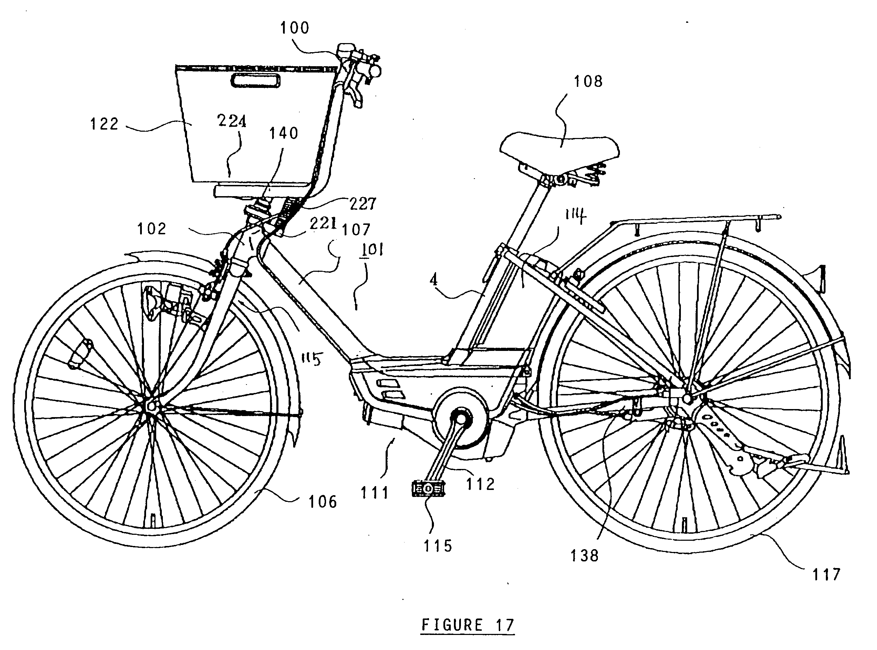

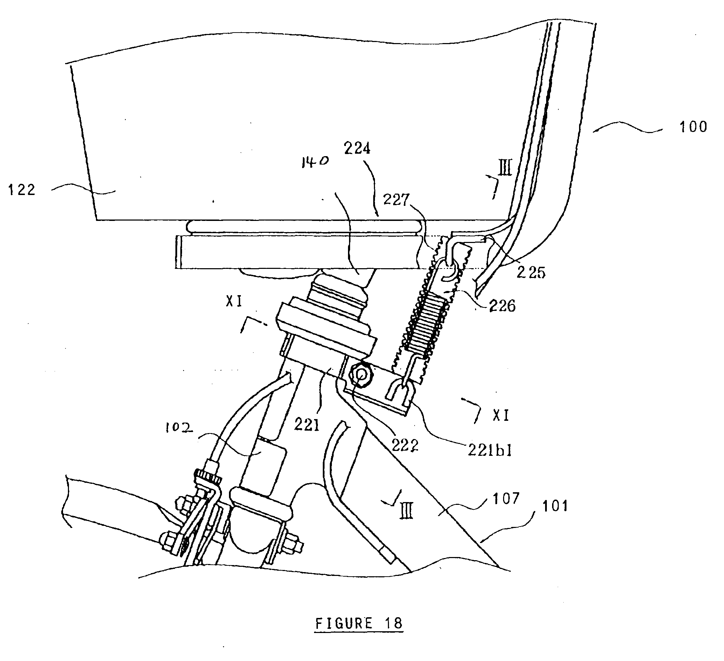

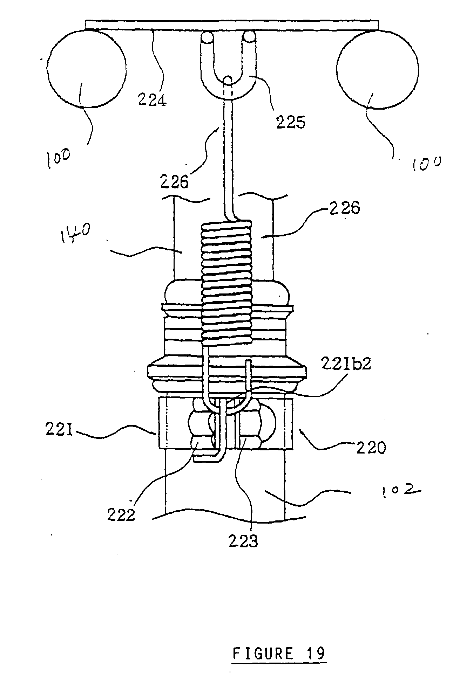

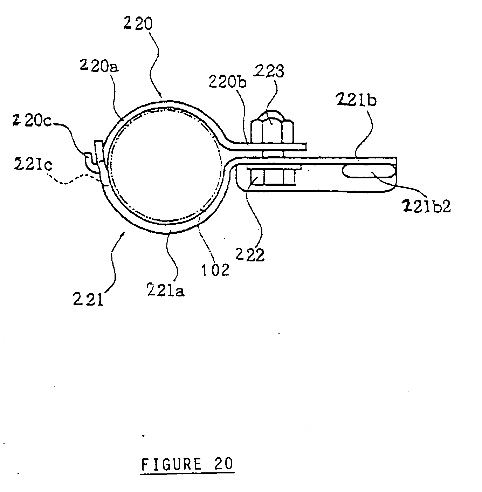

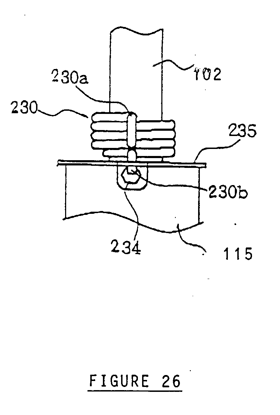

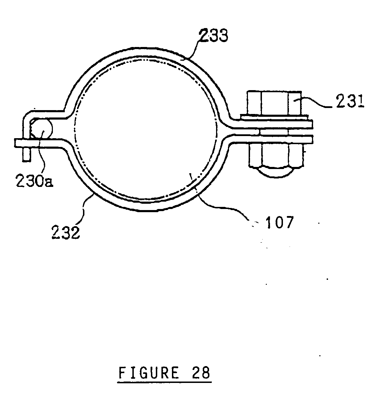

In reference to FIGs. 17 to 28, further embodiments of the invention related to a handlebar turn restricting device for a bicycle will be described in detail.

The bicycle of this embodiment is an electric motor-assisted bicycle 101 propelled by resultant power consisting of human power from the pedal and motor power. A power source, a storage battery 114, is disposed under a seat 108.

A power unit 111 including an electric motor is mounted on the vehicle body. The torque from the power unit 111 is transmitted to a rear wheel 117 supported at the rear end of a rear arm 138.

The vehicle body is provided with a pedal shaft 112 for rotatably supporting pedals 115. Human power torque is transmitted from a pedal 9, through the pedal shaft 112, to a torque joining unit disposed in the power unit 111. The resultant torque produced by joining together the human power torque and the motor torque is used for propulsion.

A handlebar post 102 is connected to the front side of part of the vehicle body, a down tube 107. A steering shaft 140 disposed in the rotation center of handlebars 100 is rotatably installed in the handlebar post 102. The steering shaft 140 is connected to a front fork 115. A front wheel 106 is rotatably supported at the fore-end of the front fork 115. The handlebars 100 are attached to the axis of the steering shaft 140. A basket 122 for carrying objects is attached to the handlebars 100.

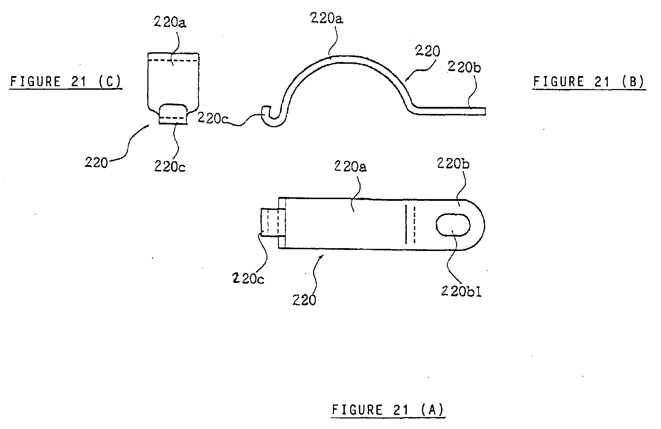

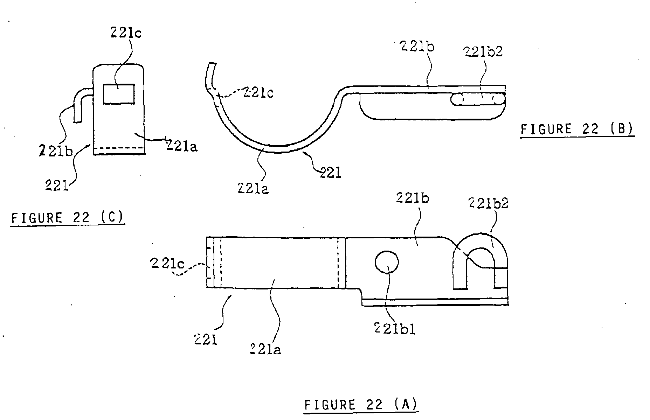

A first and a second handlebar braces 220 and 221 are secured to the upper part of the handlebar post 102 using a bolt 222 and a nut 223. The first handlebar brace 220 is formed as shown in FIG. 21; FIG.21 (a) in front view, FIG. 21 (b) in plan view, and FIG.21 (c) in left side view. The first handlebar brace 220 has a handlebar post engagement portion 220a, attachment lug portion 220b, and a hook portion 220c. The attachment lug portion 220b has an attachment hole 220b1. The second handlebar brace 221 is formed as shown in FIG. 22, FIG. 22(a) in front view, FIG22 (b) in plan view, and FIG.22 (c) in left side view. The second handlebar brace 221 has a handlebar post engagement portion 221a, attachment lug portion 221b, and an engagement hole 221c. The attachment lug portion 221b is bent to secure rigidity and has a bolt insertion hole 221b1 and an engagement stop member 221b2.

The hook portion 220c of the first handlebar brace 220 is hooked to the engagement hole 221c of the second handlebar brace 221. The hook portion 220c and the handlebar post engagement portion 221a are brought into contact with the handlebar post 102, a bolt 222 is passed through the bolt insertion hole 221b1, and a nut 223 is screwed onto the bolt and tightened.

A spring member 226 is provided between the engagement stop member 221b2 of the second handlebar brace 221 and an engagement stop member 225 secured to a carrier section 224 for attaching the basket 122. The spring member 226 is provided to restrict the turning range of the handlebars 100 and to return the handlebars toward the neutral position. The carrier section 224 under the basket 122 constitutes a movable section which rotates together with the handlebars about the steering axis. The spring member 226 is covered with a movable member 227 so as to be invisible from outside. The force of the spring member 226 is proportional to the turning angle of the handlebars 100.

Providing such a spring member 226 for restricting the turning range of the handlebars 100 and for returning the handlebars 100 toward the neutral position between the engagement stop member 225 secured to the carrier section 224, the movable section rotating together with the handlebars 100 about the steering axis, and the engagement stop member 221b2 of the second handlebar brace 221 secured to the handlebar post 102, makes it possible to restrict the turning range of the handlebars without widely changing the conventional bicycle handlebar structure. Since the spring member 226 is disposed under the object basket 122, it does not stand out when seen from outside. The spring member 226 prevents the handlebars 100 from being turned excessively due to heavy load in the basket 122, helps return the handlebars toward the neutral position by the spring force in proportion to the turning angle of the handlebars. Therefore, even a person who is physically not so strong can return the handlebars 100 to the neutral position.

Since the force of the spring member 226 increases with the increase in the turning angle of the handlebars 100, or in proportion to it, the restricting action against the turning of the handlebars starts from the point where the force of the spring member 226 is zero. Therefore, the handlebar operation can be made smoothly without receiving unnatural feeling. If the handlebars 100 tend to turn excessively, the force of the spring member 226 increases and prevents excessive turning of the handlebars 100.

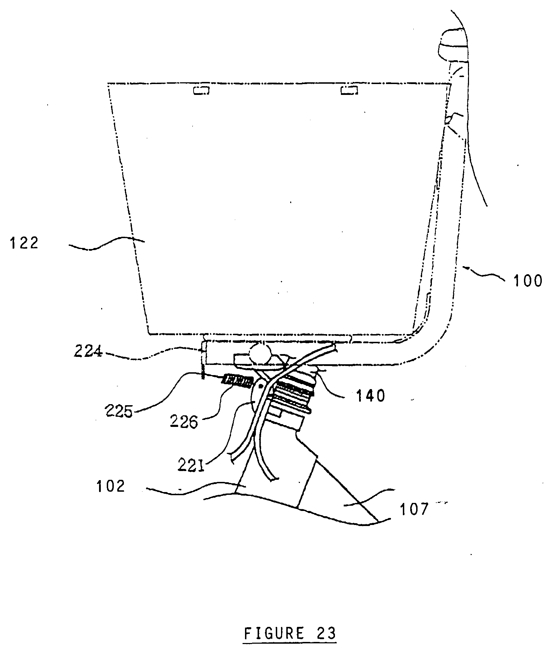

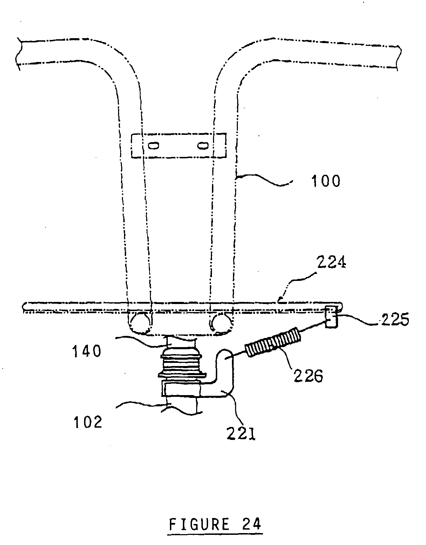

FIGs. 23 and 24 show other embodiments with different arrangements of the spring member. FIG. 23 shows the area around the handlebars in side view. FIG. 24 shows the same area in front view.

In the embodiment shown in FIG. 23, the spring member 226 is disposed in front of the handlebars 100, with its one end engaging with the engagement stop member 225 secured to the carrier section 224, the movable section rotating together with the handlebars 100, and with the other end engaging with the second handlebar brace 221. In the embodiment shown in FIG. 24, the spring member 226 is disposed by the side of the handlebars 100, with its one end engaging with the engagement stop member 225 secured to the carrier section 224, the movable section rotating together with the handlebars 100, and with the other end engaging with the second handlebar brace 221.

In the embodiment shown in FIGs. 17 to 22, and in the embodiment shown in FIGs. 23 and 24, the movable section is used as the carrier section for attaching the object basket 122. However, the movable section may also be used as the carrier section for attaching a child seat. Providing the spring member 226 in this way between the movable section, the carrier section for attaching the object basket or the child seat, rotating together with the handlebars 100 about the steering axis, and the handlebar post 102 in the front part of the vehicle body makes it possible to take a large radius of action for restrict the turning of the handlebars 100, to increase degree of freedom in designing the load, wire diameter, number of coil turns, and coil diameter, and to make finely adjusted setting of the spring member.

Also, the above arrangement makes it possible to change the setting of the handlebar turning restriction start point from which the action of restricting the turning of the handlebars 100 starts, and/or the load of the spring member 226. This in turn makes it possible to set the handlebar turning restriction start point and the spring load according to the physical strength and preference of the user, to make finely adjusted setting, and to meet a wide range of customers' demands.

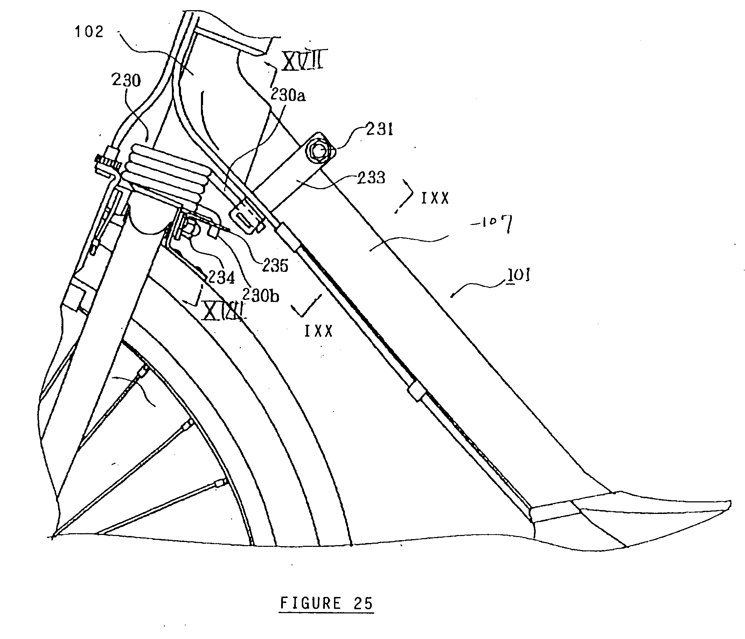

FIGs. 25 to 28 show still another embodiment. In this embodiment, a spring member 230 of a coil shape is disposed at part of the vehicle body below the handlebar post 102 to which a main frame 107 is connected. One end 230a of the spring member 203 engages with a first frame brace 232 and a second frame brace 233 attached to the main frame 107. The other end 230b of the spring member 230 is inserted into a guide slot 235a formed in a spring guide 235 attached to a front fork 115 by means of a bolt 234.

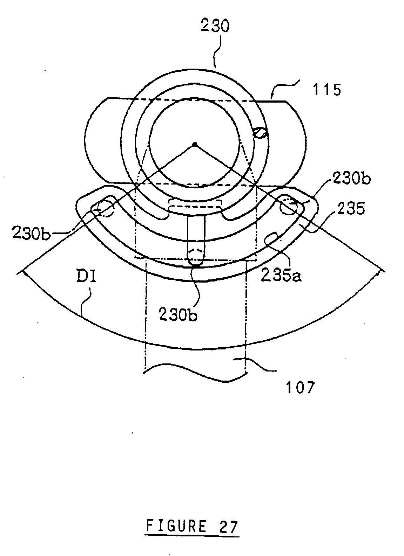

In this embodiment, the movable section is the front fork 115 rotating together with the handlebars 100. The spring guide 235 rotates as interlocked with the rotation of the front fork 115. As shown in FIG. 27, the end 230b of the spring member 230 is movable along the guide slot 235a within the rotation range D1. When the handlebars 100 are turned beyond the rotation range D1, the end 230b of the spring member 230 is stopped at the end of the guide slot 235a, and the spring force starts to increase.

As described above, since play is provided between the neutral position of the handlebars 100 and the handlebar rotation restriction start point, the spring member 230 does not work when the turning angle of the handlebars 100 is small. Therefore, when balancing at low speeds which is peculiar to bicycles, or when the turning angle of the handlebars is small in normal running, the operation force for the handlebars 100 is the same as the conventional bicycle, and no difference is felt.

Also this embodiment makes it possible to change the setting of the handlebar turning restriction start point and/or the load of the spring member 226, to set the handlebar turning restriction start point and the spring load according to the physical strength and preference of the user, to make finely adjusted setting, and to meet a wide range of customers' demands.

While bicycles conventionally require no device for restricting the handlebar turning, when heavy objects or goods are carried on the handlebar area, a mechanism is required that restricts the turning of the handlebars 100 beyond a certain angle. Such a mechanism is provided by this invention in which the spring function is used to exert a force to restore the handlebars to the neutral position so that the bicycle attitude is easily restored. The degree of the handlebar turning restriction is ideally proportional to the turning angle; the smaller the turning angle, the smaller the restoring force, and vice versa.

## Claims

1. Bicycle (1) with a handlebar structure comprising a handlebar section having a steering shaft (40) rotatably installed in a handlebar post (2) at a front end of a vehicle body frame of a vehicle body and handlebar pipes (3) secured to a steering post, **characterized in that** an object conveying space being formed in a horizontal area (3a) in front of the handlebar pipes (3) on the handlebar post (2) or the turning center of the handlebar pipes (3).

2. Bicycle according to claim 1, **characterized in that** the handlebar pipes (3) have a horizontal portion (3a) extending generally horizontally from the top end portion of the handlebar post (2) toward the rear, and an upward extending portion (3b) extending upward from the rear end of the horizontal portion (3a), and that the object carrier space available to detachably mount a child seat or basket is formed on the horizontal portion (3a).

3. Bicycle according to claim 1 or 2, **characterized in that** the positions of the horizontal portion (3a) and the upward extending portion (3b) of the handlebar pipes (3) are adjustable in the forward and backward directions relative to the handlebar post (2) either as a single body or individually.

4. Bicycle according to at least one of the preceding claims 1 to 3, **characterized in that** it is provided with an electric motor (37) for assisting pedaling power, a main battery for driving the electric motor (37), and a spare battery (25) for the main battery, and that the spare battery (25) is disposed at a position, below the horizontal portion (3a) of the handlebar pipes (3), behind the handlebar post (2) and on the vehicle body center line.

5. Bicycle according to at least one of the preceding claims 1 to 4**, characterized in that** a movable section turning about the steering shaft is provided and that a spring means (45;226) for returning the handlebars (4;100) to the neutral position is provided between the movable section and a stationary section on the vehicle body frame side.

6. Bicycle according to claim 5, **characterized in that** the movable section for turning about the steering shaft (40;140) being provided in the handlebar section.

7. Bicycle according to claim 5, **characterized in that** the movable section being a front fork (115) rotating together with the handlebars (100).

8. Bicycle according to at least one of the preceding claims 5 to 7, **characterized in that** the load of the spring means increases as the turning degree of the handlebar post becomes larger.

9. Bicycle according to at least one of the preceding claims 5 to 8, **characterized in that** a play is provided between the neutral position of the handlebars (4;100) and a position at which handlebar returning action is started with the spring means (45;226).

10. Bicycle according to claim 9, **characterized in that** the play is adjustable.
